# EUROPEAN PATENT APPLICATION

(11) **EP 3 006 240 A1**
(43) Date of publication of application: **13.04.2016**
(21) Application number: 14188017.9
(22) Date of filing: 07.10.2014
(51) Int. Cl.: B60J 5/06

(54) **System with tensioning strap runners for suspending a curtain of a curtain-sided vehicle**

(71) Applicant: Versus-Invest, 3660 Opglabbeek (BE)
(72) Inventor: Rogiers, Erik, 3850 Nieuwerkerken (BE); Peeters, Pascal, 3990 Peer (BE)
(74) Representative: Gevers Patents

(57) **Abstract**

The system comprises a rail (3) and a multiplicity of tensioning strap runners (6). The rail has a gutter-shaped first track (24) and second and third tracks (25, 26) which are arranged above said first track and which are facing one another. Each of the runners (6) comprises a frame (7); at least two track rollers (15) which are arranged to roll in said gutter-shaped first track (24); and at least one auxiliary roller (11) which is arranged to co-operate with said second (25) and said third track (26) to keep the track rollers (15) in an upright position. The track rollers (15) and the auxiliary rollers (11) are all received in one single longitudinal chamber (18) of the rail (3), the walls of which provide the different tracks for these rollers. Due to this compact arrangement, the height of the rail can be reduced whilst still allowing to attach the tensioning straps (2) above the chamber (30) for the upright runners to the tensioning strap runners (6). A sufficiently large distance can thus still be maintained between the top of the frame (7) of the tensioning strap runners (6) and the lower edge of the rail (3) which is for example required by the present T.I.R. convention.

## Description

The present invention relates to a system for suspending a curtain of a curtain-sided vehicle, which system comprises a rail and a multiplicity of tensioning strap runners arranged to be fixed to tensioning straps attached to an upper part of the curtain. The rail has a gutter-shaped first track and second and third tracks which are arranged above said first track and which are facing one another. Each of the runners comprise a frame; at least two track rollers which usually have a plastic tyre, which are rotatably mounted on said frame and which are arranged to roll in said gutter-shaped first track, which first track is located on a distance from the plane of said curtain when the curtain is suspended on the runners and tensioned vertically so that the suspended curtain exerts a moment of force on the runners; and at least one auxiliary roller which is rotatably mounted on said frame and arranged to co-operate with said second and said third track to keep the track rollers in an upright position. The auxiliary roller engages more particularly the second track to counteract said moment of force when the curtain is tensioned vertically.

Such a system is for example disclosed in EP 2 371 595 B1. In the tensioning strap runners of this known system, the auxiliary, horizontal roller is mounted on a distance above the vertical track rollers. In this way, a smaller lateral force is exerted by the plastic tyres of the track rollers onto the gutter-shaped track to counteract the moment of force exerted onto the tension strap runner when the curtain is tensioned vertically by means of the tensioning straps. The rail of the suspension system comprises two longitudinal chambers, namely a first longitudinal chamber for the track rollers and a second longitudinal chamber for the auxiliary rollers. The first longitudinal chamber has a top wall which is situated on a small distance above the top of the track rollers so that they cannot be moved out off their gutter-shaped track. The second longitudinal chamber is situated just above the first longitudinal chamber.

At its bottom, the rail comprises moreover a further longitudinal chamber for the upright runners, i.e. for the runners to which the uprights of the side wall of the vehicle are attached so that these uprights can also be slid aside when opening the side of the vehicle. In the rail illustrated in EP 2 371 595 B1 this further longitudinal chamber is situated next to the longitudinal chamber for the track rollers. A drawback of this rail is that it is not suited to meet the regulations of the present T.I.R. Convention (Transport International de Marchandises par la Route). According to these regulations the vehicles should be constructed such that no goods can be loaded or unloaded without leaving obvious traces of tampering or without breaking the seals applied by the customs. EP 2 679 423 A1 discloses for example tamper-evident fastening means for attaching the roof tarpaulin of a curtain-sided vehicle to the roof runners. These fastening means comprise a metal pin with a groove and a sleeve containing a spring engaging the groove in the metal pin to lock the sleeve to the pin.

According to the present T.I.R. convention, more particularly according to article 4 thereof, the sliding sheets shall be assembled in such a way that they cannot be opened or closed without leaving obvious traces and the sheet shall overlap the solid parts at the top of the vehicle by at least ¼ of the actual distance between the tensioning straps. A drawback of the rail illustrated in Figure 3 of EP 2 371 595 B1 is that the frame of the tensioning strap runner extends only a limited distance above the lower edge of the rail so that the side-curtain attached thereto, in particular at the top thereof by tamper-evident fastening means, only overlaps the rail over such a short distance that a too large number of tensioning strap runners would be required which considerably increases the costs of the curtain suspension system.

In practice higher rails are therefore often used, for example rails as illustrated in Figure 4 of EP 2 759 428 A2. In these rails the width of the vertical leg of the generally L-shaped rail is limited to the width of the longitudinal chamber for the upright runners. The tensioning strap runners are situated at a distance above this lowermost longitudinal chamber. The slots provided in the lower part of the frames of the runners for attaching the tensioning straps are situated next to a narrower closed longitudinal chamber of the rail which is located above the chamber for the upright runners. In this way, the height of the tensioning strap runners, and therefore their weight, can be kept limited. The narrower chamber along the lower part of the tensioning strap runners provides a free gap between the tensioning straps which are attached to the tensioning strap runners and the rail itself to avoid or reduce at least the friction between the tensioning straps and the rail when opening the side curtain. The longitudinal chamber for the auxiliary rollers is located above the narrower closed longitudinal chamber whilst the longitudinal chamber for the track rollers is situated above the longitudinal chamber for the auxiliary rollers. As a result of this arrangement, the vertical leg of the rail has a substantial height. In case the track rollers would have for example a diameter of about 32 mm, which is common in practice, the rail illustrated in Figure 4 of EP 2 759 428 A2 would have a height of about 215 mm.

A further drawback of the rail disclosed in EP 2 759 428 A2 is that there is only a short vertical distance between the gutter-shaped track and the horizontal force exerted by the auxiliary roller onto the rail. As a result thereof, large lateral forces are exerted onto the plastic tyres of the track rollers to counteract the moment of force exerted onto the tensioning strap runners when the curtain is tensioned vertically. Increasing this distance to reduce these lateral forces would however result in a further increase of the height of the rail.

An object of the present invention is to provide a new system for suspending a curtain of a curtain-sided vehicle which enables to reduce the height of the rail in particular for suspension systems wherein the tensioning straps of the curtain are attached above the longitudinal chamber for the upright runners to the tensioning strap runners to increase to vertical distance of overlap between the curtain and the rail.

To this end, the system according to the present invention is characterised in that the rail comprises a longitudinal chamber for the tensioning strap runners, which longitudinal chamber is arranged to receive the track rollers and the auxiliary rollers of the runners. The longitudinal chamber has a top wall, a bottom wall, a first side wall, and a second side wall situated opposite the first side wall. A lateral continuous longitudinal opening through which the frames of the runners extend when the curtain is suspended on the runners is provided at least in said first side wall. The bottom wall of the longitudinal chamber is provided with said gutter-shaped first track for the track rollers, the top wall of the longitudinal chamber forming above said gutter-shaped first track a stop for the track rollers preventing them from being lifted out of the gutter-shaped first track, the first side wall being provided above said longitudinal opening with said second track for the auxiliary rollers and the second side wall being provided with said third track for the auxiliary rollers.

In the system according to the present invention the track rollers and the auxiliary rollers overlap each other seen in the longitudinal direction of the rail since the track rollers and the auxiliary rollers are contained in a same longitudinal chamber of the rail and since the vertical track rollers are arranged to co-operate both with the bottom wall and with the top wall of this longitudinal chamber. It has been found that the moment of force exerted by the vertically tensioned curtain onto the tensioning strap runners can be counteracted by lateral forces exerted at the top of the runners onto the auxiliary rollers and at the bottom onto the track rollers, in particular onto the plastic tyres thereof. These lateral forces are of a same magnitude at the top and at the bottom but in order to prevent the track rollers from being damaged, an auxiliary roller is only needed at the top to avoid contact between the tyres of the track rollers and the rail at the top of the track rollers. As a matter of fact, the vertical forces exerted onto the track rollers push the plastic tyres at the bottom, i.e. at the level of the gutter-shaped first track, strongly into the rim of the roller so that it cannot be pushed out of this rim by the lateral forces. Moreover, wear of the plastic tyres by frictional movements between the plastic tyres and the gutter-shaped track during transport, when the curtain is vertically tensioned, as a result of deformations of the suspension system, is only minimal due to the fact that when during these deformations the tensioning strap runners oscillate over a small distance relative to the rail, the contact points of the track rollers with the gutter-shaped rail only move over a very small fraction of the distance over which the runners oscillate. At the top, however, the tyres of the track rollers oscillate over a distance which is about twice the distance over which the runners oscillate so that considerable wear and damages to the track rollers are avoided in the system of the present invention by keeping the track rollers in an upright position at the top of the track rollers by means of the auxiliary rollers instead of by the track rollers themselves so that there is not lateral contact between the track rollers and the rail at the top of the track rollers.

In an advantageous embodiment of the system according to the present invention, the track rollers of a tensioning strap runner have a rotation axis and the auxiliary roller a further rotation axis, the track rollers further having a symmetry plane which is perpendicular to their rotation axis and are mounted on the frame of the tensioning strap runner so that their symmetry plane is situated between the rotation axis of the auxiliary roller and the second side wall of the longitudinal chamber when the curtain is suspended on the runners and tensioned vertically.

This embodiment enables for auxiliary rollers and track rollers which have a relatively small diameter to avoid contact between the portion of the frame onto which the track rollers are mounted and the second track for the auxiliary rollers when the curtain is pulled open so that the auxiliary rollers engage the third track for the auxiliary rollers. The curtain can thus be slid open easily. Moreover, second track, i.e. the part of the first side wall extending above the longitudinal opening, can project further downwards to increase the width of the contact zone between the second track and the auxiliary rollers thereby increasing the robustness of the track system.

The present invention also relates to a tensioning strap runner for a system for suspending a curtain of a curtain-sided vehicle in accordance with the present invention.

Other particularities and advantages of the invention will become apparent from the following description of some particular embodiments of the system for suspending a curtain of a curtain-sided vehicle in accordance with the present invention and of the tensioning strap runners used therein. The reference numerals used in this description relate to the annexed drawings wherein:
Figure 1 is a cross-sectional view of a suspension system with a rail and a tensioning strap runner according to the present invention;
Figures 2 to 5 illustrate four different extreme positions of the tensioning strap runner in the rail, Figures 2 and 4 with the suspended curtain pulled outwards and Figures 3 and 5 with the curtain tensioned vertically;

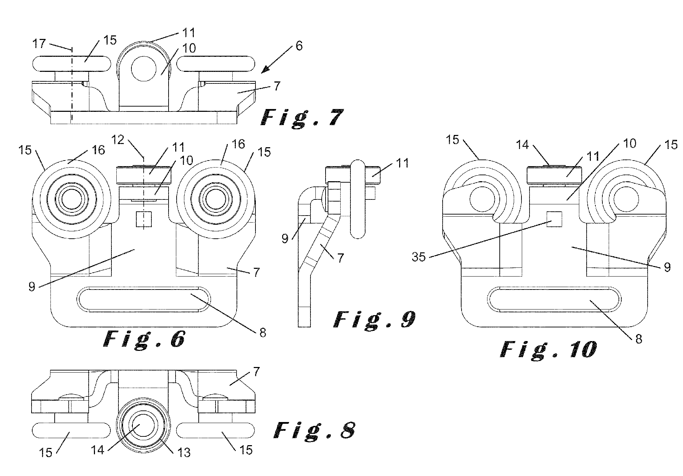

Figures 6 to 10 show respectively a front, bottom, top, right side and back view on a tensioning strap runner of the system illustrated in the previous figures;

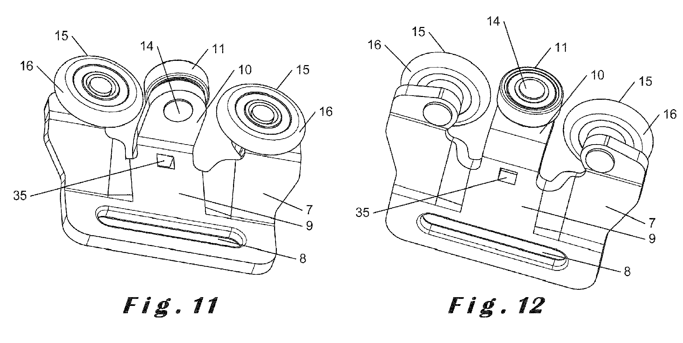

Figures 11 and 12 show perspective views on the tensioning strap runner illustrated in the previous figures; and
Figures 13 to 15 illustrate the way wherein the curtain is fixed by means of a bolt with break off nut to the tensioning strap runner.

The present invention relates to a system for suspending a curtain 1 of a curtain-sided vehicle. The vehicle may be an automotive vehicle such as a truck, or a trailer or a semi-trailer. The curtain 1 is in particular a tarpaulin. It is provided with vertical tensioning straps 2 which are attached at the bottom and at the top of the cargo space to the frame of the vehicle. By means of tensioners, which are well-known per se, the curtain 1 can be tensioned vertically at the bottom of the curtain 1.

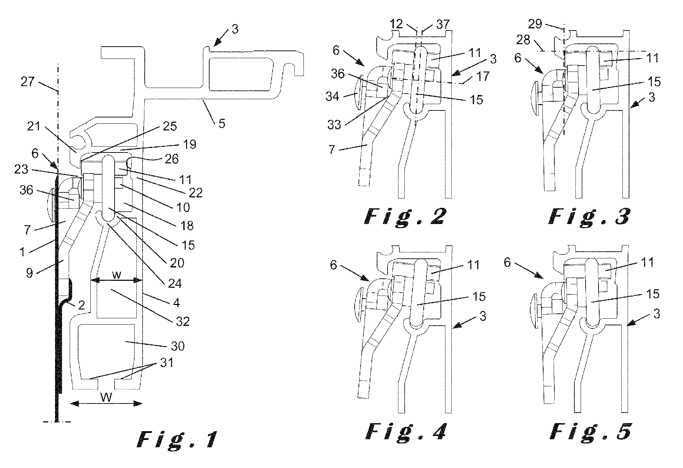

The suspension system comprises first of all a rail 3. The rail 3 of the suspension system illustrated in Figure 1 is generally L-shaped and has a vertical leg 4 and, at the top thereof, a horizontal leg 5. The top part of the rail 3 is intended to receive the carriages of a sliding roof. Such carriages are described and shown for example in detail in EP 2 679 423, the description and figures of which are incorporated herein by way of reference.

Apart from the rail 3, the suspension system comprises moreover tensioning strap runners 6 running over tracks provided in the rail 3. These runners 6 have a frame 7, the lower portion of which is provided with means, in particular a horizontal slot 8, for attaching the runner 6 to one of the tensioning straps 2 of the curtain 1. The frame 7 is generally L-shaped and has a vertical portion 9 and at the top thereof a substantially horizontal portion 10.

The horizontal portion 10 is intended to carry at least one substantially horizontal auxiliary roller 11. The auxiliary roller 11 is rotatably mounted, around a substantially vertical rotation axis 12, on top of the horizontal frame portion 10 of the runner 6. It comprises a rotating part 13 mounted by means of a roller bearing onto a fixed shaft 14. The rotating part 13 is preferably made from metal, i.e. it preferably does not comprise a plastic tyre, although the auxiliary roller 11 may have a plastic tyre.

On both sides of the auxiliary roller 11 the vertical portion 9 of the frame 7 is shifted towards the rail 3 and a vertical track roller 15 is rotatably mounted, around a substantially horizontal rotation axis 17, onto these displaced portions of the frame 7. In contrast to the auxiliary rollers 11, the track rollers 15 have preferably a plastic tyre 16 to enable the curtain 1 to be opened and closed in a smoother way.

The tracks for the different rollers 11 and 15 of the tensioning strap runners 6 are provided in one and the same longitudinal chamber 18 of the rail 3. This longitudinal chamber 18 has a top wall 19, a bottom wall 20, a first side wall 21, and a second side wall 22 situated opposite the first side wall 21. The first side wall 21 is provided with a lateral continuous longitudinal opening 23. This opening 23 extends over the major portion of the height of the first side wall 21 and partially also over a portion of the bottom wall 20 of the longitudinal chamber 18 so that the frames of the runners 6, in particular the portion thereof containing the horizontal slot 8 for attaching the curtain 1 to the runners, can project through this longitudinal opening 23 out of the rail 3.

The tracks for the rollers of the tensioning strap runners 6 comprise a gutter-shaped first track 24 for the track rollers 15 and, above this first track 24, a second 25 and a third track 26 for the auxiliary rollers 11. These two tracks 25 and 26 are facing one another and are situated on both sides of the auxiliary rollers 11 to enable the auxiliary rollers 11 to keep the runners 6 with their track rollers 15 in an upright position. The distance between the two tracks 25 and 26 is larger than the outer diameter of the auxiliary rollers 11 so that these rollers 11 cannot contact both tracks simultaneously and so that the runners 6 can pivot over a predetermined angle around the contact points of the track rollers 15 with the gutter shaped first track 24. In the longitudinal chamber 18 for the track and auxiliary rollers, the bottom wall 20 is provided with the gutter-shaped first track 24, the first side wall 21 is provided above the longitudinal opening 23 with the second track 25 and the second side wall 22 with the third track 26.

Due to the fact that the slot 8 for attaching the curtain 1 to the runner 6 is located beside the rail 3, the gutter-shaped first track 24 is situated on a distance from the plane 27 of the curtain 1 when the curtain 1 is suspended on the runners 6 and tensioned vertically so that the tensioned curtain 1 exerts a moment of force on the runners 6. This moment of force urges the auxiliary roller 11 outwards against the second track 25 and the track rollers 15 inwards against the upstanding side wall of the gutter-shaped first track 24. By the reaction forces of the first and second tracks onto the rollers of the runner, the moment of force exerted by the tensioned curtain onto the runner, is thus counteracted. The possible positions of the different rollers of the runner are illustrated in Figures 3 and 5 for the situation wherein the curtain 1 is tensioned vertically.

In Figure 3 the track rollers 15 are pulled against the bottom of the gutter-shaped track 24 and the auxiliary roller 11 against the second track 25 above the longitudinal opening 23 by the curtain 1 which is suspended onto the runner 6. When the curtain 1 is tensioned vertically, it is possible that due to the curved bottom of the gutter-shaped track 24, and due to the fact that the track rollers 15 are pushed towards the inner side wall of the gutter-shaped track 24, the track rollers 15 can move upwards. To prevent them from moving out of the gutter-shaped track 24, the top wall 19 of the longitudinal chamber 18 forms a stop for the track rollers 15 when they move upwards.

When pulling the curtain 1 outwards to open it, the runners 6 pivot about the gutter-shaped first track 24 until the auxiliary roller 11 engages the third track 26, i.e. the track on the second, inner side wall 22 of the longitudinal chamber 18. Also in this position the track rollers 15 can rest onto the bottom of the gutter-shaped first track 24, as illustrated in Figure 2, or they can be moved upwards, by the outward pulling force exerted onto the curtain 1, as illustrated in Figure 4. Also in this position, the top wall 19 of the longitudinal chamber 18 forms a stop for the track rollers 15 when they move upwards.

The longitudinal chamber 18 has in particular such a height that when the auxiliary rollers 11 are in a first extreme position (illustrated in Figures 3 and 5) wherein they engage the second, outer track 25, when the auxiliary rollers 11 are in a second extreme position (illustrated in Figures 2 and 4) wherein they engage the third, inner track 26 and when the auxiliary rollers 11 are in any intermediate position between these two extreme positions, the track rollers 15 extend upto a vertical distance from the top wall 19 of the longitudinal chamber 18 which is smaller than the vertical distance over which the track rollers extend within the gutter-shaped first track 24. Moreover, the track rollers 15 are mounted in such a position on the frame 7 of the runners 6 that they project above a horizontal plane 28 which is tangent to the top side of the auxiliary roller 11 when the curtain is suspended on the runners and tensioned vertically (see Figure 3). In this way, the track rollers 15 may overlap the auxiliary roller 11 in a side view of the runner 6 (seen in the longitudinal direction of the rail 3) whilst still enabling the runner 6 to abut the top wall 19 of the longitudinal chamber 18 with its track rollers 15 instead of with its auxiliary roller 11 when being lifted upwards. This prevents the auxiliary roller 11 from being damaged in case large forces would be exerted thereon laterally instead of perpendicular to its rotation axis 12.

The track rollers 15 have a symmetry plane 37 which is perpendicular to their rotation axis 17. The vertical portion of the frame 7 of the runners 6 is preferably bent on both sides of the auxiliary roller 11 to such an extent that the symmetry planes 37 of the track rollers 15 are situated between the vertical rotation axis 12 of the auxiliary roller 11 and the second, inner wall 22 of the longitudinal chamber 18. This enables to avoid that the portions of the frame 7 onto which the track rollers 15 are mounted project outwards beyond the auxiliary roller 11, seen in a side view of the runners, i.e. in the longitudinal direction of the rail 3. In other words, when the curtain 1 is tensioned vertically, the uppermost extremities of the portions of the frame 7 onto which the track rollers 15 are mounted should preferably not extend outwardly beyond a vertical plane 29 which is tangent to the auxiliary roller 11 at the location where it contacts the second track 25 (see Figure 3). In this way, the second track 25 can extend further downwards in order to provide a strong support for the auxiliary roller 11 when the curtain 1 is tensioned vertically whilst avoiding contact between the upper extremity of the frame 7 of the runner 6 and the lower edge of the second track 25 when the runner 6 is pivoted inwards upon opening the curtain 1.

Notwithstanding the higher moment of force exerted onto the runner 6 as a result of the increased distance between the plane of the curtain 1 and the gutter-shaped track 24, damage to the plastic tyres 16 of the track rollers 15 is prevented by supporting the runners 6 only at the top with a horizontal auxiliary roller 11, i.e. without any additional horizontal auxiliary roller, as disclosed for example in Figure 1 of EP 2 371 595 B1, to counteract the moment of force without intervention of the track rollers 15. As a matter of fact, by providing one of the two forces of the couple of forces counteracting the moment of force exerted onto the runner at the bottom of the track rollers, i.e. at the location where the tyres 16 of the track rollers 15 engage the inner side wall of the gutter-shaped track 24, any reciprocating movements of the runners 6 as a result of deformations of the cargo space during transport, will only produce minimal displacements of lower portions of the track rollers 15. At the points of contact with the track, the velocity of the tyre is indeed always equal to zero whilst at the top of the tyre, the velocity of the tyre is equal to twice the velocity of the runner 6.

The rail 3 of the suspension system is to be supported by the uprights, which should preferably also be able to be slid aside, to open the side of the curtain-side vehicle completely. The rail 3 therefore preferably comprises a further longitudinal chamber 30 with a track, in particular a double track 31, for upright runners. These upright runners are known per se, and shown for example in Figures 3 to 5 of EP 2 759 428 A, so that they have not been illustrated in the drawings.

The longitudinal chamber 30 for the upright runners is located underneath the longitudinal chamber 18 for the tensioning strap runners 6 and forms the lower edge of the rail 3. In between the longitudinal chamber 18 for the tensioning strap runners 6 and the longitudinal chamber 30 for the upright runners is a gap enabling to attach the tensioning straps 2 above the longitudinal chamber 30 for the upright runners to the tensioning strap runners 6. At the location of this gap, the rail could consist of a thicker wall portion. In the preferred embodiment illustrated in the figures, the gap is however bridged by a closed longitudinal chamber 32. This closed chamber 32, or the thicker wall portion, has a width w which is smaller than the width W of the longitudinal chamber 30 for the upright runners so that at the location of said gap, in particular next to the closed chamber 32, a free space is available for the lower part of the frame 7 of the runners 6 and for the tensioning straps 2 attached thereto. The tensioning strap runners 6 have indeed preferably a lower edge which extends above the longitudinal chamber 30 for the upright runners, next to the closed longitudinal chamber 32, when the curtain 1 is suspended on the runners 6 and tensioned vertically. The slot 8 for fixing the curtain 1 by means of the tensioning straps 2 to the tensioning strap runners 6 is further preferably located next to the closed longitudinal chamber 32 when the curtain 1 is suspended on the runners 6 and tensioned vertically.

The horizontal slot 8 provided in the frame 7 of the tensioning strap runners 6 has a length which corresponds to the width of the tensioning straps 2. The distance between the rotation axes 17 of the two track rollers 15 is preferably smaller than the length of the slot 8 in order to keep the length of the runners 6, measured in the longitudinal direction of the rail 3, to a minimum. In this way, the curtain 1 can be opened to a maximum extent, which is limited by the total length of the different runners 6.

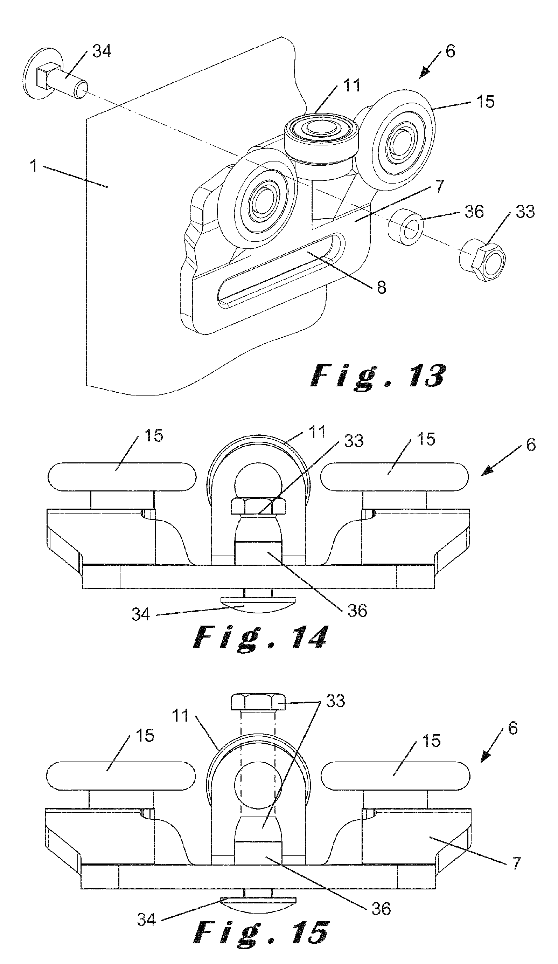

To meet the requirements of the present T.I.R. convention, the curtain 1 is preferably fixed above the slot 8 by means of tamper-evident fastening means to the frame 7 of the tensioning strap runners 6. These tamper-evident fastening means comprise for example a break off nut 33 and a round headed bolt 34. As illustrated in Figures 13 to 15, the break off nut 33 has a conical shaped body with a hexagonal nut at the top so that it can be tightened using a standard spanner. At the end, the hexagonal nut breaks off leaving the tamper resistant cone onto the bolt 34. The bolt 34 has a square part underneath its round head which is prevented from rotating by being received in a corresponding square hole 35 in the frame 7 of the runner 6. In between the break off nut 33 and the frame 7 is provided a spacer 36 so that the hexagonal part of the break off nut can easily be accessed by a common socket spanner. By providing the hole 35 just below the horizontal portion 10 of the frame of the runners 6 so that the socket spanner can still be applied onto the nut, a maximum distance between the break off nut 33 and the lower edge of the rail 3 can be obtained and thus a larger minimum distance between the tensioning straps 2, or in other words between the tensioning strap runners 6, as prescribed by the present T.I.R. convention.

The compact arrangement of the auxiliary rollers 11 and track rollers 15 as in the above described embodiment enables to reduce the height of the rail 3 whilst still allowing to attach the tensioning straps 2 above the longitudinal chamber 30 for the upright runners to the tensioning strap runners 6so that a sufficiently large distance can be maintained between the top of the frame of the tensioning strap runners 6 and the lower edge of the rail 3 without having to increase the height and thus the weight of the tensioning strap runners 6. Notwithstanding the increased moment of force exerted onto the tensioning strap runners 6, as a result of the increased distance between the track rollers 15 and the plane 27 of the curtain 1 to enable to provide the overlap between the auxiliary roller 11 with the track rollers 15 in a side view for sufficiently small roller diameters, i.e. with shaft diameters which are relatively large compared to the roller diameters, the tensioning strap runners 6 as illustrated in the drawings are able to resist this moment of force, without being damaged quickly, and this with a minimum number of rollers, namely with only one auxiliary roller 11 and two track rollers 15.

## Claims

1. A system for suspending a curtain (1) of a curtain-sided vehicle, which system comprises a rail (3) and a multiplicity of tensioning strap runners (6) arranged to be fixed to tensioning straps (2) attached to an upper part of the curtain (1), the rail (3) having a first track (24), which is gutter-shaped, and a second (25) and a third track (26) which are arranged above said first track (24) and which are facing one another, each of said runners (6) comprising:
- a frame (7);
- at least two track rollers (15) which are rotatably mounted on said frame (7) and which are arranged to roll in said gutter-shaped first track (24), which first track (24) is located on a distance from the plane (27) of said curtain (1) when the curtain (1) is suspended on the runners (6) and tensioned vertically so that the suspended curtain (1) exerts a moment of force on the runners (6); and
- at least one auxiliary roller (11) which is rotatably mounted on said frame (7) and arranged to co-operate with said second (25) and said third track (26) to keep the track rollers (15) in an upright position, the auxiliary roller (11) engaging the second track (25) to counteract said moment of force when the curtain (1) is tensioned vertically,
**characterised in that**
said rail (3) comprises a longitudinal chamber (18) for the tensioning strap runners (6), which longitudinal chamber (18) is arranged to receive the track rollers (15) and the auxiliary rollers (11) of the runners (6) and has a top wall 19), a bottom wall (20), a first side wall (21), and a second side wall (22) situated opposite the first side wall (21), with a lateral continuous longitudinal opening (23) through which the frames (7) of the runners (6) extend when the curtain (1) is suspended on the runners (6) being provided at least in said first side wall (21), the bottom wall (20) of the longitudinal chamber (18) being provided with said gutter-shaped first track (24) for the track rollers (15), the top wall (19) of the longitudinal chamber (18) forming above said gutter-shaped first track (24) a stop for the track rollers (15) preventing them from being lifted out of the gutter-shaped first track (24), the first side wall (21) being provided above said longitudinal opening (23) with said second track (25) for the auxiliary rollers (11) and the second side wall (22) being provided with said third track (26) for the auxiliary rollers (11).

2. A system according to claim 1, **characterised in that** the auxiliary roller (11) comprises a rotating part (13) having a bottom side and a top side, the track rollers (15) projecting above a horizontal plane (28) which is tangent to said top side when the curtain (1) is suspended on the runners (6) and tensioned vertically.

3. A system according to claim 1 or 2, **characterised in that** said longitudinal chamber (18) has such a height that when the auxiliary roller (11) of the runner (6) is in a first extreme position wherein it engages said second track (25), when the auxiliary roller (11) is in a second extreme position wherein it engages said third track (26) and when the auxiliary roller (11) is in any intermediate position between said first and second extreme positions, the track rollers (15) of said runner (6) extend upto a vertical distance from the top wall (19) of said longitudinal chamber (18), which vertical distance is smaller than the vertical distance over which the track rollers (15) extend within the gutter-shaped first track (24).

4. A system according to any one of the claims 1 to 3, **characterised in that** the track rollers (15) of a tensioning strap runner (6) have a rotation axis (17) and the auxiliary roller (11) a further rotation axis (12), the track rollers (15) further having a symmetry plane (37) which is perpendicular to their rotation axis (17) and are mounted on the frame (7) of the tensioning strap runner (6) so that their symmetry plane (37) is situated between the rotation axis (12) of the auxiliary roller (11) and the second side wall (22) of the longitudinal chamber (18) when the curtain (1) is suspended on the runners (6) and tensioned vertically.

5. A system according to any one of the claims 1 to 4, **characterised in that** the track rollers (15) comprise a plastic tyre (16).

6. A system according to any one of the claims 1 to 5, **characterised in that** the rail (3) has a lower edge formed by a further longitudinal chamber (30) provided with a track (31) for upright runners and in between the longitudinal chamber (18) for the tensioning strap runners (6) and the further longitudinal chamber (30) for the upright runners a gap which is preferably bridged by at least one closed longitudinal chamber (32).

7. A system according to claim 6, **characterised in that** the further longitudinal chamber (30) for the upright runners has a width (W) and at the location of said gap the rail (3) has a further width (w) which is smaller than the width (W) of said further longitudinal chamber (30), the tensioning strap runners (6) having a lower edge which extends above said further longitudinal chamber (30) when the curtain (1) is suspended on the runners (6) and tensioned vertically.

8. A system according to any one of the claims 1 to 7, **characterised in that** the tensioning strap runners (6) are provided with a slot (8) for fixing the curtain (1) by means of the tensioning straps (2) to the tensioning strap runners (6), which slot (8) is located underneath the track rollers (15).

9. A system according to claim 7 and 8, **characterised in that** the slot (8) for fixing the curtain (1) by means of the tensioning straps (2) to the tensioning strap runners (6) is located at the level of the gap between the longitudinal chamber (18) for the tensioning strap runners (6) and the further longitudinal chamber (30) for the upright runners when the curtain (1) is suspended on the runners (6) and tensioned vertically.

10. A system according to claim 8 or 9, **characterised in that** the track rollers (15) of a tensioning strap runner (6) have a rotation axis (17) located on a predetermined distance from one another and said slot (8) has a length which is larger than the predetermined distance between the rotation axes (17) of the track rollers (15).

11. A system according to any one of the claims 8 to 10, **characterised in that** the curtain (1) is fixed above said slot (8) by means of tamper-evident fastening means, in particular by means of a break off nut (33), to the frame (7) of the tensioning strap runner (6).

12. A tensioning strap runner (6) for a system for suspending a curtain of a curtain-sided vehicle as claimed in any one of the claims 1 to 11.
